# EUROPÄISCHE PATENTANMELDUNG

(11) **EP 4 431 205 A1**
(43) Veröffentlichungstag der Anmeldung: **18.09.2024**
(21) Anmeldenummer: 23161980.0
(22) Anmeldetag: 15.03.2023
(51) Int. Cl.: B22F 10/10, B22F 10/68, B22F 12/55, B28B 1/00, B29C 64/165, B29C 64/35, B33Y 10/00, B33Y 30/00, B33Y 40/20

(54) **VERFAHREN ZUR HERSTELLUNG EINES BAUTEILS MITTELS SCHLICKERBASIERTES BINDER JETTING**

(71) Anmelder: Kyocera Fineceramics Europe GmbH, 68229 Mannheim (DE)
(72) Erfinder: Diener, Sarah, 95100 Selb (DE)
(74) Vertreter: dompatent von Kreisler Selting Werner - Partnerschaft von Patent- und Rechtsanwälten mbB

(57) **Zusammenfassung**

Die vorliegende Erfindung betrifft ein schlickerbasiertes Verfahren zur Herstellung eines Bauteils, das die Verwendung eines Auswaschmittels zur Entfernung von überschüssigem Material vorsieht, sowie eine Vorrichtung zur Durchführung des erfindungsgemäßen Verfahrens.

## Beschreibung

Die vorliegende Erfindung betrifft ein schlickerbasiertes Verfahren zur Herstellung eines Bauteils, das die Verwendung eines Auswaschmittels zur Entfernung von überschüssigem Material vorsieht, sowie eine Vorrichtung zur Durchführung des erfindungsgemäßen Verfahrens.

Der 3D-Druck ist eine Sammelbezeichnung für alle Fertigungsverfahren, bei denen der Aufbau der Werkstücke schichtweise erfolgt. Dabei wird zunächst die Geometrie des Werkstücks auf Basis computergenerierter Daten ermittelt und das zu verdruckende Material, wie ein Kunststoff, Kunstharz, Keramik oder Metall, in Pulverform schichtweise ausgebracht. Eine Form des 3D-Drucks ist das Binder Jetting, bei dem das Pulver an den Stellen, die zum Werkstück gehören, durch selektives Ausbringen eines Binders verbunden und die nächste Materialschicht ausgebracht wird. Diese Schritte werden so lange wiederholt, bis das Werkstück vollständig entstanden ist. Überflüssiges Material verbleibt zunächst lose in der jeweiligen Schicht und bildet so ein stützendes Pulverbett, so dass in der Regel auf zusätzliche Stützstrukturen verzichtet werden kann. Ist der Aufbau des Werkstücks abgeschlossen, wird das überschüssige Pulver entfernt und kann zur Weiterverarbeitung in den Prozess zurückgeführt werden.

Das sogenannte Entpulvern des Werkstücks, bei dem dieses von losem Pulver befreit wird, ist meist ein manueller Prozess, der sich insbesondere bei feinem Pulver oder Kavitäten im Werkstück beliebig aufwendig gestalten kann. Entsprechend besteht Interesse daran diesen Verfahrensschritt zu optimieren.

DE 10 2018 119 027 beschreibt ein Verfahren zur Herstellung eines Bauteils mit Stereolithographie, das die folgenden Schritte aufweist: A) Erzeugen eines Bauteils nach Maßgabe eines virtuellen 3D-Modells des Bauteils durch Aushärten eines flüssigen Kunststoffs mittels Stereolithographie, und B) Reinigen des Bauteils durch zumindest eine Drehbewegung des Bauteils um eine Drehachse oder um mehrere Drehachsen, wobei Reste des flüssigen Kunststoffs von der Oberfläche des Bauteils durch Zentrifugalkraft aufgrund der Drehbewegung entfernt werden. Das Verfahren weist allerdings den Nachteil auf, dass es aufgrund der geringen Festigkeit ungesinterter Bauteile und der hohen Stabilität des Pulverkuchens nicht auf Verfahren übertragbar ist, die mit flüssigen Komponenten arbeiten und die auf ein kompaktes Pulverbett abstellen, wie beispielsweise schlickerbasiertes Binder Jetting. Auch werden Kavitäten im Bauteil nicht miterfasst.

US 5490882 offenbart ein Verfahren zum Entfernen von losen Pulverteilchen aus inneren Durchgängen eines Bauteils, das durch schichtweisen Aufbau hergestellt ist, umfassend die Schritte des Einbringen des Bauteil in ein Flüssigkeitsbad und des Anlegens von Mikrowellenenergie einer Frequenz, die so gewählt ist, dass sie die Flüssigkeit in ihrem gesamten Volumen erwärmt, so dass die Flüssigkeit in dem gesamten Volumen zum Sieden gebracht wird, wodurch eine Fluidbewegung in den inneren Durchgängen des Bauteils erzeugt wird, durch die loses Pulver aus den inneren Durchgängen entfernt werden soll.

Im Gegensatz zu klassischen pulverbasierten Verfahren ist bei schlickerbasierten Verfahren das überschüssige Pulver nicht lose und es kommt zu Wechselwirkungen zwischen den Pulverpartikel und zu mechanischer Verhakung. Daher kann das übrige Pulverbett nicht mittels Druckluft oder anderer in pulverbasierten Verfahren üblichen Methoden entfernt werden.

US 6,596,224 betrifft ein Verfahren zur Herstellung eines pulverhaltigen Bauteils, wobei das Verfahren die folgenden Schritte umfasst: a. Bereitstellen eines Trägers; b. Aufbringen eines Schlickers, der ein erstes pulverförmiges Material enthält, über einem ausgewählten Bereich des Trägers, um eine erste Schicht aus pulverförmigem Material zu bilden; c. Behandeln der abgelagerten Schicht aus pulverförmigem Material unter solchen Bedingungen, dass der Flüssigkeitsgehalt der ersten Schicht verringert wird; d. Ausbringen eines Bindemittels in ausgewählten Bereichen der Schicht, wobei das Bindemittel bewirkt, dass die Schicht in den ausgewählten Bereichen gebunden wird und dass aufeinanderfolgende Schichten in den ausgewählten Bereichen aneinander gebunden werden; und e. Ausbringen eines Schlickers über einem Teil der ausgewählten Fläche des Trägers, um einen zusätzlichen Schichtbereich zu bilden. Der Schlicker kann dabei ein Redispergiermittel enthalten, mit dessen Hilfe ungebundenes Pulver im Bauteil entfernt werden soll.

Redispergierung beruht auf dem Prinzip, dass Wasser oder eine andere Flüssigkeit zwischen die Pulverpartikel eindringt und diese nach und nach darin verteilt werden. Die Redispergierung ist in der Regel ein langsamer Prozess und ein Redispergieren von Partikeln, die in Hinterschnitten oder Kanälen sitzen kaum oder nur mit entsprechend manueller Nacharbeit möglich.

Es war daher die Aufgabe der vorliegenden Erfindung ein Verfahren zur Verfügung zu stellen, das die Entfernung von losen Pulverpartikeln in mittels schlickerbasierten 3D-Druckverfahren hergestellten Bauteilen ermöglicht.

Es wurde überraschend gefunden, dass diese Aufgabe durch ein Verfahren gelöst wird, bei dem ein Auswaschmittel selektiv ausgebracht wird.

Daher ist ein erster Gegenstand der vorliegenden Erfindung ein Verfahren zur Herstellung eines dreidimensionalen Bauteils mittels additiver Fertigung, das die folgenden Schritte umfasst, vorzugsweise in der angegebenen Reihenfolge:
a) Ausbringen eines Schlickers umfassend Pulverpartikel unter Erhalt einer Schlickerschicht;
b) Reduzieren des Flüssigkeitsgehalts der Schlickerschicht;
c) Ausbringen eines Binders gemäß einem Querschnitt des Bauteils;
d) Wiederholen der Schritte a) bis c) unter Erhalt eines Pulverbetts mit dem darin eingebetteten Bauteil;
e) Kontaktieren des Pulverbetts mit einem flüssigen Reinigungsmedium unter Erhalt des gewünschten Bauteils
dadurch gekennzeichnet, dass ein Auswaschmittel zumindest teilweise auf die nicht mit Binder benetzten Bereiche ausgebracht wird.

Durch das separate Verdrucken des Auswaschmittels, ähnlich dem Binder, kann ein gezieltes Einbringen des Auswaschmittels erreicht werden, ohne dass dies beispielsweise die Viskosität des Schlickers beeinträchtigen würde, was der Fall ist, wenn das Auswaschmittel in dem Schlicker enthalten ist. Daher ist eine Ausführungsform bevorzugt, in der das Auswaschmittel separat vom Schlicker ausgebracht wird.

Das erfindungsgemäße Verfahren bietet weiterhin den Vorteil, dass durch das Auswaschmittel auch schwer zu reinigende Stellen im Bauteil, wie beispielsweise innenliegende Kanäle, auf einfache Weise von überschüssigem Pulvermaterial befreit werden können.

Gemäß dem erfindungsgemäßen Verfahren wird der Flüssigkeitsgehalt des ausgebrachten Schlickers reduziert. Dies erfolgt in der Regel bis zum Erreichen eines gewünschten Feuchtigkeitsgehalts und kann bis zur Trocknung reichen. Die Reduktion des Feuchtigkeitsgehalts des Schlickers erfolgt vorzugsweise durch Verwendung einer saugfähigen Unterlage oder Absaugen der flüssigen Komponenten des Schlickers, beispielsweise durch Anlegen von Unterdruck. Auf diese Weise lässt sich ein hoch verdichtetes Pulver erhalten, welches optional durch eine unterstützende Trocknungseinheit nachgetrocknet werden kann. Alternativ oder parallel kann die Reduktion des Flüssigkeitsgehalts mittels einer Wärme erfolgen, beispielsweise mittels einer beheizten Plattform, IR-Strahlung, Heißluft oder andere, dem Fachmann bekannte, Wärmequellen.

Das Ausbringen des Auswaschmittels kann in unterschiedlicher Art und Weise erfolgen. In einer bevorzugten Ausführungsform wird das Auswaschmittel nach Ausbringen des Binders oder gleichzeitig mit diesem ausgebracht, wobei das Ausbringen beispielsweise mit verschiedenen Druckköpfen erfolgen kann. Auf diese Weise ist es möglich, in einem zeiteffektiven Verfahren ein Bauteil herzustellen, dass mit Hilfe des Auswaschmittels effizient aus dem Pulverbett gelöst werden kann.

Das Auswaschmittel wird zumindest teilweise auf die Bereiche des Pulverbetts ausgebracht, auf die kein Binder ausgebracht wurde. In einer besonders bevorzugten Ausführungsform wird das Auswaschmittel entlang der Konturen des Bauteils und gegebenenfalls innenliegender Strukturen ausgebracht, was einen sparsamen und materialschonenden Einsatz des Auswaschmittels und darüber hinaus ein sauberes Auslösen des Bauteils aus dem Pulverbett erlaubt. In einer weiterhin bevorzugten Ausführungsform wird das Auswaschmittel als Negativ zum Querschnitt des Bauteils ausgebracht.

In der Regel wird eine erste Stabilität des Bauteils durch Aushärten des Binders erreicht. Daher ist eine Ausführungsform des erfindungsgemäßen Verfahrens bevorzugt, in der das Verfahren weiterhin das Aushärten des Binders umfasst. Das Aushärten des Binders erfolgt vorzugsweise während des Druckprozesses und kann je nach Art des Binders beispielsweise thermisch oder mit Hilfe eines Lasers erfolgen. Das Aushärten des Binders erfolgt vorzugsweise vor oder nach Ausbringen des Auswaschmittels.

Eine weitere bevorzugte Ausführungsform des erfindungsgemäßen Verfahrens umfasst weiterhin einen Schritt, in dem das Auswaschmittel getrocknet wird. Das Trocknen des Auswaschmittels erfolgt vorzugsweise vor oder nach Aushärten des Binders, aber vor Auftrag einer weiteren Schlickerschicht.

Im Rahmen des erfindungsgemäßen Verfahrens wird überschüssiges Pulver dadurch entfernt, dass das Pulverbett mit einem flüssigen Reinigungsmedium in Kontakt gebracht und das Auswaschmittel mit den darin dispergierten Pulverpartikeln aus dem Bauteil ausgetragen wird. In einer bevorzugten Ausführungsform ist das Auswaschmittel daher ausgewählt aus Substanzen, die in dem flüssigen Reinigungsmedium quellbar sind; Substanzen, die durch Kontakt dem flüssigen Reinigungsmedium Gas entwickeln; aus Hydrohilierungsmitteln sowie Mischungen hiervon. Durch die so erzeugte Volumenzunahme des Auswaschmittels konnte eine besonders effektive Reinigung des Bauteils von losen Pulverpartikeln erreicht werden.

Vorzugsweise handelt es sich bei dem flüssigen Reinigungsmedium um eines, das ausgewählt ist aus der Gruppe bestehend aus Wasser, Alkoholen und Mischungen hiervon.

Das Auswaschmittel sorgt dafür, dass das Bauteil aus dem Pulverbett herausgelöst und überschüssige Pulverpartikel entfernt werden können. In einer bevorzugten Ausführungsform ist das Auswaschmittel ausgewählt aus der Gruppe bestehend aus Stärken, modifizierten Cellulosen, Kasein, Glykole, Alignate, Polysaccharide, Dextrane, quervernetzte Polymere, insbesondere quervernetztes Polyvinylpyrrolidon, Natriumhydrogencarbonat, Zitronensäure, Weinsäure und Sorbitanfettsäureester.

Das Auswaschmittel wird vorzugsweise mit Hilfe eines Druckkopfes, beispielsweise eines Piezodruckkopfs, ausgebracht, was eine hohe Präzision und die Auflösung filigraner Strukturen im Bauteil erlaubt. Damit das Auswaschmittel entsprechend verarbeitbar ist, weist es vorzugsweise eine näherungsweise newtonsche Viskosität von weniger als 35 mPas auf, bestimmt bei 25 °C mittels eines Rotationsrheometers.

Erfindungsgemäß wird das Material, aus dem das Bauteil aufgebaut wird, in Form eines Schlickers ausgebracht. Daher umfasst das erfindungsgemäße Verfahren in einer bevorzugten Ausführungsform weiterhin einen oder mehrere Trocknungsschritte zum Trocknen des Schlickers. Das Trocknen kann dabei auf dem Fachmann bekannte Art und Weise erfolgen.

Im Rahmen des erfindungsgemäßen Verfahrens können eine Reihe von unterschiedlichen Materialien verwendet werden, wobei insbesondere keramische Materialien bevorzugt sind. Daher ist eine Ausführungsform bevorzugt, in der die im Schlicker enthaltenen Pulverpartikel ausgewählt sind aus der Gruppe bestehend aus den Oxiden, Carbiden und Nitriden von Metallen und Nichtmetallen. Siliziumcarbid findet aufgrund seiner Härte und hohen Temperaturstabilität eine breite Anwendung, stellt aber auch eine besondere Herausforderung bei der Verarbeitung dar. Überraschenderweise wurde gefunden, dass das erfindungsgemäße Verfahren auch für die Herstellung von Bauteilen auf Basis von Siliziumcarbid geeignet ist. Daher ist eine Ausführungsform besonders bevorzugt, in der es sich bei den Pulverpartikeln um Siliziumcarbid handelt.

Der im erfindungsgemäßen Verfahren verwendete Binder umfasst vorzugsweise ein oder mehrere Verbindungen der Gruppe bestehend aus Harzen, Polysacchariden, Polyvinylalkohol, Cellulose und Cellulosederivaten, Ligninsulfonaten, Polyethylenglykol, Polyvinylderivaten, Polyacrylaten und Mischungen hiervon.

Ein weiterer Gegenstand der vorliegenden Erfindung ist eine Vorrichtung zur Durchführung des erfindungsgemäßen Verfahrens. Die erfindungsgemäße Vorrichtung zeichnet sich dadurch aus, dass es ein Mittel zum Ausbringen eines Schlickers, ein Mittel zum Ausbringen eines Binders und ein Mittel zum Ausbringen eines Auswaschmittels aufweist.

Vorzugsweise handelt es sich bei dem Mittel zum Ausbringen des Schlickers um eine Düse, insbesondere eine Schlitzdüse, oder eine Rakel.

Weithin ist eine Ausführungsform bevorzugt, in der es sich bei dem Mittel zum Ausbringen eines Binders und/oder bei dem Mittel zum Ausbringen eines Auswaschmittels um eine Düse und/oder Druckkopf handelt.

Die vorliegende Erfindung wird anhand der folgenden Figur näher beschrieben, wobei diese keinesfalls als Einschränkung des Erfindungsgedanken zu verstehen ist.

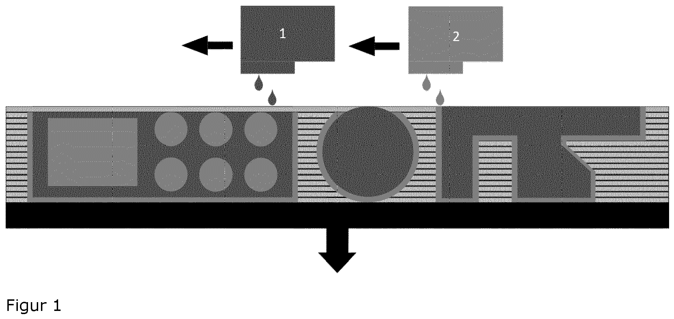

Figur 1 zeigt schematisch den Ablauf des erfindungsgemäßen Verfahrens, bei dem ein Binder mit Hilfe eines ersten Druckkopfes (1) entsprechend der gewünschten Geometrie des Bauteils ausgebracht wird. Das Auswaschmittel wird mit Hilfe eines zweiten Druckkopfes (2) entlang den Konturen des Bauteils ausgebracht. Nach Fertigstellung des Druckvorgangs wird das Bauteil durch Kontaktieren mit einem Reinigungsmittel, das das Auswaschmittel dazu bringt aufzuquellen, herausgelöst.

Durch das Quellen des Auswaschmittels wird ein "Absprengen" der losen Pulverpartikel erreicht und so das Bauteil ohne aufwendige Nacharbeitung entpulvert.

## Patentansprüche

1. Verfahren zur Herstellung eines dreidimensionalen Bauteils mittels additiver Fertigung, umfassend die Schritte:
a) Ausbringen eines Schlickers umfassend Pulverpartikel unter Erhalt einer Schlickerschicht;
b) Reduzieren des Feuchtigkeitsgehalts der Schlickerschicht;
c) Ausbringen eines Binders auf der Pulverschicht gemäß einem Querschnitt des gewünschten Bauteils;
d) wiederholen der Schritte a) bis c) unter Erhalt eines Pulverbetts mit dem darin eingebetteten Bauteil;
e) Kontaktieren des Pulverbetts mit einem flüssigen Reinigungsmedium unter Erhalt des gewünschten Bauteils
**dadurch gekennzeichnet, dass** ein Auswaschmittel zumindest teilweise auf die nicht mit Binder benetzten Bereiche ausgebraucht wird.

2. Verfahren gemäß Anspruch 1, **dadurch gekennzeichnet, dass** das Auswaschmittel separat vom Schlicker ausgebracht wird.

3. Verfahren gemäß wenigstens einem der vorangehenden Ansprüche, **dadurch gekennzeichnet, dass** das Auswaschmittel ausgewählt ist aus der Gruppe bestehend aus Substanzen, die in dem flüssigen Reinigungsmedium quellbar sind; Substanzen, die durch Kontakt mit dem flüssigen Reinigungsmedium Gas entwickeln; aus Hydrophilierungsmitteln sowie Mischungen hiervon.

4. Verfahren gemäß wenigstens einem der vorangehenden Ansprüche, **dadurch gekennzeichnet, dass** das flüssige Reinigungsmedium ausgewählt ist aus der Gruppe bestehend aus Wasser, Alkoholen und Mischungen hiervon.

5. Verfahren gemäß wenigstens einem der vorangehenden Ansprüche, **dadurch gekennzeichnet, dass** das Auswaschmittel ausgewählt ist aus der Gruppe bestehend aus Stärken, modifizierten Cellulosen, Kasein, Glykole, Alignate, Polysaccharide, Dextrane, quervernetzte Polymere, insbesondere quervernetztes Polyvinylpyrrolidon, Natriumhydrogencarbonat, Zitronensäure, Weinsäure und Sorbitanfettsäureester.

6. Verfahren gemäß wenigstens einem der vorangehenden Ansprüche, **dadurch gekennzeichnet, dass** das Verfahren weiterhin einen oder mehrere Trocknungsschritte zum Trocknen des Schlickers umfasst.

7. Verfahren gemäß wenigstens einem der vorangehenden Ansprüche, **dadurch gekennzeichnet, dass** der Schlicker Pulverpartikel enthält, die ausgewählt sind aus der Gruppe bestehend aus den Oxiden, Carbiden und Nitriden der Metalle und Nichtmetalle, insbesondere Siliciumcarbid-Partikel.

8. Verfahren gemäß wenigstens einem der vorangehenden Ansprüche, **dadurch gekennzeichnet, dass** der Binder ausgewählt ist aus der Gruppe bestehend aus Harzen, Polysacchariden, Polyvinylalkohol, Cellulose und Cellulosederivaten, Ligninsulfonaten, Polyethylenglykol, Polyvinylderivaten, Polyacrylaten und Mischungen hiervon.

9. Vorrichtung zur Durchführung eines Verfahrens gemäß wenigstens einem der Ansprüche 1 bis 8, **dadurch gekennzeichnet, dass** die Vorrichtung ein Mittel zum Ausbringen eines Schlickers, ein Mittel zum Ausbringen eines Binders und ein Mittel zum Ausbringen eines Auswaschmittels aufweist.

10. Vorrichtung gemäß Anspruch 9, **dadurch gekennzeichnet, dass** es sich bei dem Mittel zum Ausbringen eines Schlickers um eine Düse oder eine Rakel handelt.

11. Vorrichtung gemäß wenigstens einem der Ansprüche 9 und 10, **dadurch gekennzeichnet, dass** es sich bei dem Mittel zum Ausbringen eines Binders und/oder bei dem Mittel zum Ausbringen eines Auswaschmittels um eine Düse und/oder einen Druckkopf handelt.
